# EUROPEAN PATENT APPLICATION

(11) **EP 2 752 969 A1**
(43) Date of publication of application: **09.07.2014**
(21) Application number: 13290003.6
(22) Date of filing: 08.01.2013
(51) Int. Cl.: H02J 13/00

(54) **Method for providing control of an energy network**

(71) Applicant: Alcatel Lucent, 75007 Paris (FR)
(72) Inventor: Templ, Wolfgang, 74372 Sersheim (DE); Kopp, Dieter, 75428 Illingen (DE); Stocker, Klaus, 70567 Stuttgart (DE)
(74) Representative: Zinsinger, Norbert

(57) **Abstract**

The present invention concerns a method of providing control for an energy network (100), the energy network (100) comprising one or more first control elements (16, 17, 18) associated with a first level (10) of the energy network (100) and one or more second control elements (26, 27, 28) associated with a second level (20) of the energy network (100). The method comprises the steps of receiving (14), by one or more of the second control elements (26, 27, 28) associated with the second level (20) of the energy network (100), one or more control commands provided by one or more of the first control elements (16, 17, 18) associated with the first level (10) of the energy network (100), the one or more control commands comprising a set of rules for controlling the second level (20) of the energy network (100), preferably storing the set of rules received from one or more of the first control elements (16, 17, 18) in said one or more second control elements (26, 27, 28), and locally controlling (26a), by said one or more second control elements (26, 27, 28), one or more devices (21, 22, 23) of the second level (20) of the energy network (100) based on the, preferably stored, set of rules and/or locally processing, by said one or more second control elements (26, 27, 28), in particular based on the, preferably stored, set of rules, information referring to one or more devices (21, 22, 23) of the second level (20) of the energy network (100) and/or information referring to one or more devices (31, 32, 33, 34) of a third level (30) of the energy network (100). The present invention concerns further one or more control elements (3, 16, 17, 18, 26, 27, 28, 36, 37, 38, 39) associated with a particular level of the energy network (100).

## Description

### Background of the Invention

A smart grid energy network might comprise a central control station which is in communication with energy markets, energy generators, which are in particular conventional/bulk energy generators, the devices of a transmission network, of one or more distribution networks and the local energy network(s) comprising in particular local energy consumers being private and/or industry energy consumers and local energy providers, in particular renewable energy providers. The control of such energy network is based on a centralized communication with a central control station.

### Summary of the Invention

The present invention aims to improve the control for an energy network. The objective of the invention is achieved by a method of providing control for an energy network, the energy network comprising one or more first control elements associated with a first level of the energy network and one or more second control elements associated with a second level of the energy network. The method comprises the steps of receiving, by one or more of the second control elements associated with the second level of the energy network, one or more control commands provided by one or more of the first control elements associated with the first level of the energy network, the one or more control commands comprising a set of rules for controlling the second level of the energy network, preferably storing the set of rules received from one or more of the first control elements in said one or more second control elements and locally controlling, by said one or more second control elements, one or more devices of the second level of the energy network based on the, preferably stored, set of rules and/or locally processing, by said one or more second control elements, based on the, preferably stored, set of rules, information referring to one or more devices of the second level of the energy network and/or to one or more devices of a third level of the energy network. The objective of the present invention is further achieved by a control element, associated with a second level of an energy network, adapted to receive one or more control commands provided by one or more control elements associated with a first level of the energy network, the one or more control commands comprising a set of rules for controlling the second level of the energy network, preferably to store the set of rules, to locally control one or more devices of the second level of the energy network based on the, preferably stored, set of rules and/or to locally process information referring to one or more devices of the second level of the energy network and/or to one or more devices of a third level of the energy network. The objective of the present invention is further achieved by a control element associated with a first level of an energy network, the control element being adapted to create a set of rules for the control of a second level of the energy network and to provide the set of rules to one or more control elements associated with the second level of the energy network.

The present invention advantageously provides the evolution of a smart grid to an intelligent grid. A smart grid is an energy network where the distribution of the energy and the generation of the energy takes the volatile demand and generation of energy, in particular because of renewable energy sources, and the adaptation of the energy consumption in accordance to variable energy prices into account. An intelligent (smart) grid as presented by the following description aims to improve a balanced energy flow and operation conditions across all levels of the energy grid by implementing on each level in the grid local control and information processing which work independently on each grid level.

Further advantages of the present invention are achieved by embodiments implemented by features of the dependent claims.

In a preferred embodiment, the step of locally processing information referring to the one or more devices of the energy network comprises processing measurements provided by said devices and/or receiving and/or processing status information being information about the status, in particular energy demand, energy supply, switch-off, switch-on of said devices of the energy network, in particular in relation to the energy providers and/or consumers of the energy network, and/or forwarding the information, in particular information about processed measurements and/or received and/or processed status information, to the one or more control elements associated with the first level of the energy network.

In a preferred embodiment, the step of locally processing information referring to one or more devices of the second level of the energy network and/or information referring to one or more devices of a third level of the energy network comprises receiving, by said one or more second control elements, information from one or more devices of the second level of the energy network, and/or receiving, by said one or more second control elements, information from one or more devices of the third level of the energy network, in particular by means of the control elements controlling the one or more devices of the third level of the energy network, and preferably storing the received information referring to one or more devices of the second level of the energy network and/or referring to one or more devices of the third level of the energy network.

In a preferred embodiment, the information referring to one or more devices of the second level of the energy network and/or information referring to one or more devices of a third level of the energy network might be provided to the one or more second control elements in any other way, in particular from one or more devices or control elements of the first level or a higher level of the energy network, for example contemporaneously with the transmitting of control commands.

In more general terms, while primarily control commands comprising a set of rules are transmitted preferably from one or more higher levels to one or more lower levels, wherein the terms higher and lower are used according to a vertical hierarchy of the energy network as described in the description, and further information, in particular in regard of the devices to be controlled, in particular in regard of energy consumers and/or providers, are transmitted from one or more lower levels to one or more higher levels, the transmitting of control commands and/or further information might be provided in any further way. For example, control commands might be transmitted from a first control element of the first level to one second control element of the second level and then forwarded by said second control element of the second level to a second control element of the second level different from said second control element of the second level that have received the control commands from the first control element of the first level. Furthermore, for example, information referring to the energy demand of particular energy consumers of a third level might be provided by the control elements associated to said particular energy consumers of the third level via a second control element of the second level to a control element of the first level for further processing. For example, information referring to the energy demand of particular energy consumers of a third level might be provided by the control elements associated to said particular energy consumers of the third level to one second control element of the second level, forwarded from said second control element of the second level to a first control element of the first level, which in particular might process this information, and then forwarded from the first control element of the first level to said or to a further second control element of the second level, which processes this information to control a device of the second level, for example a secondary substation of the second level, which delivers energy to the energy consumers of the third level.

In a preferred embodiment, the step of locally processing information referring to one or more devices of the second level of the energy network and/or information referring to one or more devices of a third level of the energy network comprises forwarding said information to one or more first control elements of the first level of the energy network or to further devices of the energy network.

In a preferred embodiment, the method further comprises forwarding the set of rules and/or further information within the second level of the energy network by sending, by one or more devices and/or in particular second control elements of the second level of the energy network, the set of rules and/or further information to one or more devices and/or in particular second control elements of the second level of the energy network, wherein in particular one or more devices and/or in particular second control elements of the second level of the energy network receive the set of rules and/or further information redundantly, this means from more than one device and/or control element sending the set of rules and/or further information. This redundant sending or transmission improves the security and resilience, in particular in case of communication breakdown concerning a particular communication line, namely one of the communication lines over which the information and/or set of rules have been transmitted.

In a preferred embodiment, the method further comprises creating, by the one or more first control elements associated with the first level of the energy network, a first set of rules for the control of the second level of the energy network, providing, by the one or more first control elements associated with the first level of the energy network, the first set of rules to the one or more second control elements associated with the second level of the energy network.

In a preferred embodiment, the method further comprises creating, by the one or more first control elements associated with the first level of the energy network and/or, preferably based on the first set of rules, by the one or more second control elements associated with the second level of the energy network, a second set of rules for the control of the third level of the energy network, providing, by the one or more first control elements associated with the first level of the energy network or by the one or more second control elements associated with the second level of the energy network, the second set of rules to one or more third control elements associated with the third level of the energy network.

Preferably, the second set of rules is based on the first set of rules, wherein the first set of rules preferably indicate how the second set of rules is to be created, i.e. the first set of rules comprising guidelines for the creation of the second set of rules. For example, the first set of rules might comprise the second set of rules in an abstract manner, as a kind of basic software program concept, wherein the specific variables must be added by the first or second control elements creating the second set of rules based on the first set of rules with values in relation to the devices of the third level of the energy network, this means the devices that are controlled, based on the second set of rules, by the third control elements of the third level of the energy network. These values might comprise fist of all an indication or identification of the particular device to be controlled, because the first control elements might not know exactly which are the devices of the third level of the energy network in a very de-centralized implementation (for example the control element on a first level might not know all private energy consumers on the third level), further switch-on parameter, switch-off parameter and so forth. However, in preferred embodiments, part of these parameters, in particular the identification of the devices, might be provided only by the control elements on the third level when executing the set of rules according to the implementation.

In a preferred embodiment, the method further comprises receiving, by one or more of the second control elements associated with the second level of the energy network one or more updating control commands provided by one or more of the first control elements associated with the first level of the energy network, the one or more updating control commands comprising a set of rules for controlling the second level of the energy network, wherein the set of rules comprised by the updating control commands replaces and/or supplements the set of rules comprised by the control commands received before the updating control commands have been received.

In a preferred embodiment, the one or more second control elements control the second level of the energy network based on the control commands received before reception of the updating control commands and based on the updating control commands after reception of the updating control commands or more precisely based on the respective set of rules comprised therein.

Preferably, the locally controlling of the one or more devices of the second level of the energy network based on the, preferably stored, set of rules is further based on the information referring to one or more devices of the second level of the energy network and/or to one or more devices of a third level of the energy network.

In this context, it should be again noted that the implementation described herein in particular with reference to the second level of the energy network to which the secondary substations belong, might be implemented on each level of the energy network. With other words, the structure as described herein comprising a first, second and third level might be shifted and/or extended within the hierarchy of level of an energy network, making a particular level the first level according to the implementation. The implementation might be continued and spanned over more than three levels, by equivalent implementation of the method from each level to each level of the energy network. Therefore, the control chain might span from the wide area monitoring and control on the level of the primary generation and/or transport network levels to the home control boxes of private households and might cover all levels described herein or further level of an energy network which might be implemented.

With reference to the exemplary described preferable implementation, in particular, the locally controlling of the second level of the energy network is based on the received set of rules on the second level, until the set of rules is updated by updating control commands received by the one or more control elements of the second level of the energy network. Likewise the one or more control elements of the third level of the energy network control the devices of the third level of the energy network based on the received set of rules and optionally by processing further information, e.g. status information of devices of the energy network, until the received control commands are updated by updating control commands comprising a set of rules replacing and/or supplementing the set of rules comprised by the control commands before update.

In a preferred embodiment, the set of rules is updated regularly, in particular in regular time intervals, in particular each day or each minute and/or upon occurrence of an event, in particular if the energy demand and/or supply, in particular of one or more devices controlled by a particular control element exceeds a predetermined limit.

In a preferred embodiment, the step of locally controlling the second level of the energy network comprises controlling the second level of the energy network based on the received set of rules by the one or more control elements of the second level based on the received set of rules autarkical on the second level, i.e. independently on the second level by means of the received and preferably stored set of rules without further control commands are needed and even in case of communication breakout between the one or more control elements having received the one or more control commands and the one or more control elements from which the control commands have been received. This applies preferably on each level on which the method described herein is implemented.

In a preferred embodiment, the step of locally controlling the one or more devices of the second level of the energy network based on the set of rules and/or on the received information comprises activating or deactivating the one or more devices of the second level of the energy network, processing measurements in regard of the one or more devices of the second level of the energy network and/or receiving information from the one or more devices of the second level of the energy network, processing the received information based on the set of rules and creating control commands, in particular concrete control orders such as switching on or off, to be sent to the one or more devices of the second level of the energy network based on said processing.

In a preferred embodiment, the first, second and third level of the energy network are each one of a level of a plurality of levels of the energy network comprising in particular a level of a transmission network comprising devices of the transmission network, a level of the distribution network comprising the devices of the distribution network, the level of the distribution network being preferably subdivided into a level of primary substations and a level of secondary substations, and a level of the local energy network comprising the devices of the local energy network, in particular of energy consumers and local energy providers.

In a preferred embodiment, the levels of the energy network are hierarchically implemented from a highest level to a lowest level, in particular the first level being the highest level, the second level being the next lower level lower than the first level, the third level being the next level lower than the second level etc. In a preferred embodiment, every kind of information, optionally including control commands, which is transmitted to a device or control element might be transmitted on request of the receiving device or control element or might be transmitted on initiative of the sending device or control element. This implementation is alternative or combinable to an event triggered information flow and/or update of control commands and the set of rules comprised therein.

Furthermore, the implementation described herein, might in preferred embodiments be combined with the implementation of a central control element which might send control commands and/or information to one or more devices and/or control elements of the energy network.

Furthermore, a control element of a higher level might send to a lower level, beside control commands comprising a set of rules, further control commands comprising in particular concrete control orders and/or information for the control of devices of said lower level, in particular to the control elements of said lower level.

Furthermore, preferably, if a device on a particular level changes operation state (e.g. when a rule is processed by means of said device, e.g. a device is switched on or off), the control unit of said level controlling said device reports the state of the device to the level higher and/or to the level lower than the level on which said device is situated. In case of communication problems with said device, the devices on the higher and lower level can continue operation based on the information already received ("failsafe operation scenario").

### Brief description of the figures:

The present invention will be more completely understood by the following detailed description of embodiments of the present invention with reference to the figures.
- Fig. 1: depicts a schematic view of parts of an energy network and of steps of a method for providing control in an energy network
- Fig. 2: depicts a schematic view of parts of an energy network and of steps of a method for providing control in an energy network
- Fig. 3: depicts a more detailed view of parts of an energy network and of steps of a method for providing control in an energy network

### Detailed description of embodiments

In the following, preferred embodiments of the present invention are described for illustrative reasons, while the scope of the present invention is defined by the claims. Unless otherwise derivable by the context, the embodiments are not meant to be exclusive, but rather to be combinable thereby forming further embodiments.

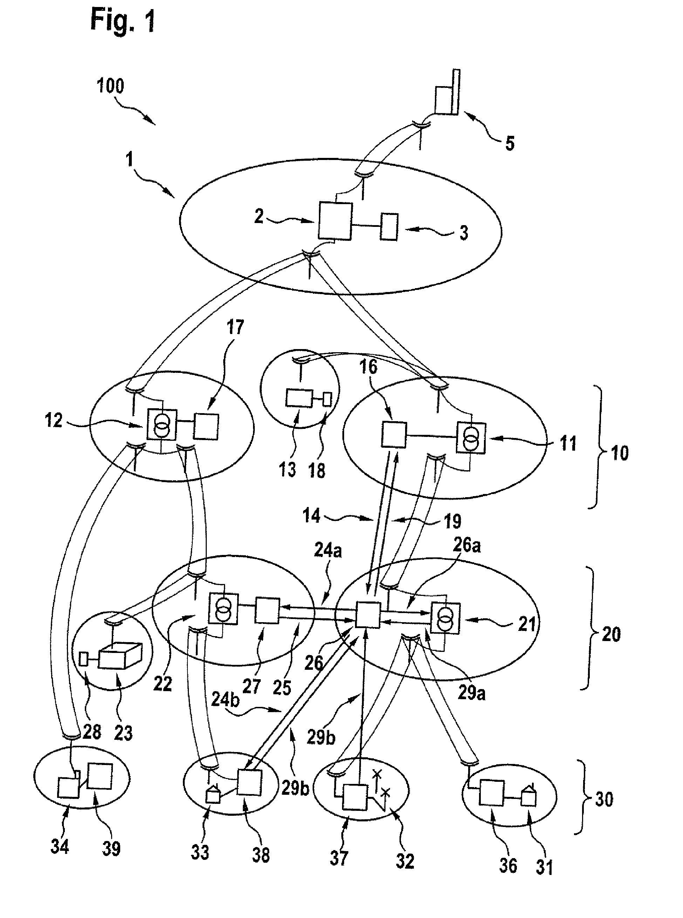

Figure 1 symbolizes an energy network 100 by exemplary elements of the energy network 100. The energy network 100 comprises a plurality of levels corresponding to the structure of the energy network 100. The plurality of levels might have any order and has usually a vertical order or hierarchy from a highest level to a lowest level. However, in a more general understanding, a level might correspond to any determined area for which control elements are provided. In the most common implementation structure, the levels are hierarchically ordered from a first level, which might be determined as the highest level to a second level lower than the first level, to a third level and so on until the lowest level. However, the first level according to the implementation of the present invention might not be the highest level, but any level of the structure of the energy network so that below this level the second level, being in particular the next below following level, and the further lower level are implemented. In particular, if the first level according to the present invention is not the highest level, the level above the first level might be termed the zero level being the highest level. On each level of the energy network 100, devices of the energy network 100 are implemented which in particular provide the energy transport and/or energy generation or further are devices which consume the provided energy.

The present invention will be described within a particular implementation in which the devices of the primary substations belong to the first level, the devices of the secondary substations belong to the second level and the devices of the local energy consumers and local energy providers belong to the third level. Therefore, the level of the devices of the transport level, which might be determined as the highest level because the transport network is above the distribution network could be determined in this example as a zero level. In a further embodiment, the devices of the transport network might be regarded as the first level and/or the levels might be determined in a different way.

The hierarchy of the levels is based on the fact, that the energy flow usually is from the highest level to the lowest level, in particular from the transport network via the distribution network, subdivided into the distribution network of the primary substations and the distribution network of the secondary substations to the local network, where the energy is consumed by the energy consumers. However, as already stated, in particular within a smart grid, energy might be provided on every level, in particular by renewable energy providers which might insert their energy on every level of the energy network.

In the present scenario, the hierarchy of the levels comprise the level corresponding to one or more transport networks, the level of the distribution networks, each distribution network being subdivided into the level of the primary substations and the level of the secondary substations and the local energy network levels of the local energy consumers and/or local energy providers.

For exemplary reasons, figure 1 depicts one transport network 1 comprising devices of the transport network 1, the devices might be devices for the transport of energy such as device 2 which forwards the energy provided from the exemplary power plant 5. The device 2 is controlled by control element 3, which might be a control element corresponding to the control elements which will be described in more detail below in context of the primary and secondary substations. In Figure 1, two primary substations are depicted for illustrative reasons, namely primary substation 11 and primary substation 12. A primary substation is in particular used to transfer the energy provided from the transport network 1 further via the distribution network, in particular to one or more secondary substations. Further a primary substation usually will transform the energy provided from the transport network 1 from a high voltage level to a medium voltage level, for example from a high voltage level of 110/63 kV to a medium voltage level of 33/11 kV. Figure 1 depicts the exemplary secondary substations 21 and 22. The secondary substations transfer the energy to devices of the local energy network, in particular to local energy consumers which might be the exemplary private energy consumers 31 and 33 or to industrial energy consumer 34. A secondary substation in particular transforms the energy from a medium voltage level to a low voltage level, e.g. from a medium voltage level of 33/11 kV to a low voltage level of 400/230 V. In case the local energy consumers are private energy consumers, such as a private household, the energy is provided on the low voltage level of 400/230 V via a secondary substation, e.g. via the secondary substation 21 to the private energy consumers 31 and via the secondary substation 22 to the private energy consumer 33. In case the local energy consumer is a industrial energy consumer, the industrial energy consumer might be provided via a secondary substation just as a private energy consumer, but usually the industrial energy consumer might need energy on a medium voltage level of 33/11 kV and is therefore be provided from a primary substation with medium voltage energy, for example the industrial energy consumer 34 is provided from the primary substation 12 with medium voltage energy.

In the exemplary embodiment, the level to which the primary substations 11 and 12 belong is defined as the first level 10, the level to which the secondary substations 21 and 22 belong is defined as the second level 20 and the level to which the local energy consumers belong is defined as the third level 30.

Furthermore, on each level of the energy network 100, energy providers might be implemented, in particular energy providers of renewable energy such as wind farms, solar plants, bio mass, water energy providers and/or energy storage means. For illustrative reasons, Figure 1 depicts on the third level 30 the local energy provider 32 which might be a photovoltaic energy provider, which feeds its energy into the energy network, for example via secondary substation 21 or in a further way, maybe directly to an energy consumer of the third level 30. Alternatively or in addition, a local energy consumer might in addition be a private or local energy provider. For example, local energy consumer 33 might also provide, in particular renewable, energy such as by a photovoltaic element. For illustrative reasons, Figure 1 depicts on the second level 20 a renewable energy provider 23 which feeds its energy into the distribution grid. Furthermore, an energy storage element 13 might be provided for illustrative reasons on the first energy level 10.

For the control of the devices of the energy network 100, control elements are provided which are associated to the levels of the energy network to which the controlled devices belong. In a preferred embodiment, each control element which is associated to a particular level of the energy network 100, is more precisely associated to a particular device which belongs to said level. For example, on the first level, the primary substation 11 is controlled by control element 16, the primary substation 12 is controlled by control element 17 and the energy storage 13 is controlled by control element 18. A control element might thus control one device, such as control elements 16, 17 and 18 control devices 11, 12 and 13, respectively. Alternatively, a control element might control more than one devices of the level to which the control element is associated. For example, but not depicted in Figure 1, a control element such as control element 16 might control two primary substations such as primary substations 11 and 12. In a further example, a device such as an energy storage 13 might be controlled by the control element 17 which is associated to the primary substation 12. In this example, the control element 17 controls the primary substation 12 and furthermore the energy storage element 13.

In a preferred embodiment, a control element on the second level 20 might control more than one secondary substations, e.g. substation 21 and substation 22 and/or further substations (not depicted). For sake of completeness, it should be noted that along the description of the present invention, the control elements are described as being on the level of the devices which are controlled by the control elements. For example, on the second level 20, control elements 26, 27, 28 control devices 21, 22 and 23 which belong to said second level 20. However, according to a different implementation and/or different termination, the control elements which control the devices of a particular level, for example of the second level, might be regarded as being implemented above said particular level, for example above the second level, in more detail between the first level of the primary substations and the second level of the secondary substations. With other words, the control elements which control the devices of the second level might be regarded as being between the first and the second level, according a particular understanding on a medium level such as a 1,5 or 1½ level or transition level. This applies accordingly to the control elements which control the devices of the first level, namely in particular the primary substations. With other words, the control elements which control the devices of the first level might be regarded as being on the same level as the devices controlled by said devices (such as it is the understanding in the present description) or the control elements controlling the devices of the first level might be regarded as being situated above the devices of the first level, more precisely in a layer between the layer above the first level, e.g. the transport network (which could be termed as the highest "zero" level) and the first layer of the primary substations, thus in a 0,5 or ½(transition) layer. The same applies for all layers implemented according to the present invention. It has to be noted that the levels of the devices to be controlled could be more numerous than the described first (primary substations), second (secondary substations), third (local energy consumers/providers) and (above) zero level (transport network) and so it is accordingly to the medium levels wherein the control elements are implemented which would be termed accordingly (such as 0,5; 1,5; 2,5 etc.).

In either case, the devices which belong to a particular level are controlled by control elements which are associated to said level, either being (logical) part of this (logical) level or laying above that particular level and thereby forming an own level or medium level or control level. However, they still are associated with the particular level of the devices which they control and thus are covered by the wording of the claims, namely e.g. the first control elements are associated with the first level of the energy network, the second control elements are associated with the second level of the energy network. The word or feature "associated" could be defined in particular as "being part of" or "being logical part of" or as "being provided for".

In the preferred embodiment described with reference to Figure 1, on the first level 10 of the energy network, control elements 16, 17 and 18 control devices 11, 12 and 13. On the second level 20 of the energy network 100, a control element 26 is provided which controls secondary substation 21, a control element 27 is associated to the second level 20 for the control of secondary substation 22 and a control element 28 is associated to level 20 and more precisely to the renewable energy provider 23, i.e. for the control of the energy provider 23. On the third level 30, control elements 36, 37, 38 and 39 control the devices 31, 32, 33 and 34, respectively.

The following exemplary embodiment is described in particular with reference to control element 16 which is associated with the first level 10 of the energy network 100 and controls primary substation 11, control element 26 which is associated to the second level 20 of the energy network 100, controlling secondary substation 21 and control elements 36 and 37 which are associated to the third level 30 of the energy network 100 and control the private energy consumer 31 and the local (renewable) energy provider 32, respectively.

Control element 26 which is a second control element according to the termination of the present embodiment receives one or more control commands, which are provided by the control element 16 which is a first control element. The communication between first control element 16 and the second control element 26 might be implemented by wireline or wireless, e.g. mobile communication, fibre, DSL etc. or in any further way. This applies in general equivalently to the communication between any control elements or further devices of the present invention. The control commands comprise a set of rules, which the second control element preferably stores in its storage means, which might be any storage elements appropriate for storing the control commands which might be implemented in software, preferably, or hardware or a combination thereof.

The control commands comprise a set of rules for control of the second level 20 of the energy network, in particular for controlling the devices of the second level 20 of the energy network 100. Based on the received control commands and the set of rules, control element 26 controls in particular secondary substation 21, but the processing of the rules might also be used for the control of further devices of the second level 20 of the energy network 100. The further devices controlled by second control element 26 might be devices which are in addition controlled by further second control elements, such as secondary substation 22 is controlled by control element 27 additionally. In this case, both control elements 26 and 27 work together to control the devices controlled by them. In particular control elements 26 and 27 might exchange 24a, 25 control information and/or control commands and will thereby be enabled to process the rules to control the devices controlled by them.

In a further embodiment, one single second control element, e.g. control element 26, might control more than one devices exclusively, only one second control element is then used for the control of more than one devices of the second level 20. For example, devices 21 and 22 might be controlled only by the second control element 26. The control element 26 might be situated adjacent to one or more devices controlled by control element 26 or might be situated at another place. Preferably, to make the communication and the control between control element 26 and the devices 21 and possibly 22 more secure, control element 26 might be implemented adjacent or even within the same housing of at least one of the controlled devices, e.g. secondary substation 21.

It is an advantage of the present invention that the control of devices of a level of the energy network is provided by the control elements associated to said level of the energy network. Therefore there is not need for a central control element or central control station controlling the devices of the energy network. Therefore, the control elements controlling the devices of the corresponding level are preferably associated to the controlled devices so as to provide a secure control communication between the controlling devices and the controlled devices. Once the control elements have received the control commands comprising a set of rules based on which they can and will control the devices of the corresponding level independently, they do not need further control commands from other devices, nor from the devices of the higher level nor from a central control station which might even not exist at all. Therefore, even in case of communication breakdown between a control element of a higher control level and the control element of the level to which the controlled devices belong, the latter control elements will control the devices of the corresponding level independently. Therefore, to provide secure communication and control between a control element of a level and the devices of said level controlled by said control element, the control element is situated adjacent to the devices controlled by said control element. Therefore, preferably, control element 26 is situated adjacent to the controlled device 21 and optionally to device 22 if device 22 is also controlled by control element 26 as far as this is technically possible.

Preferably, control element 26 stores the received control commands which control element preferably had received from control element 16 so that control element 26 can process the control commands on the second level 20 and does not need permanent control commands or information from another control element, in particular from control element 16 and/or 17 or from further control elements of the second, first or "zero" level or from a central control station which even might not be implemented at all, at least which is not further needed once the control commands are received by the control element 26 which now can process the control commands and the rules comprised therein kind of independently from further control commands. The same might apply for any further information that control element 26 might need for the control of secondary substations 21 and of 22, this means the control element 26 might store the needed information in its storage means. However, independently from the stored set of rules, control element 26 might receives further information from devices of the second level of the energy network and/or from the third level of the energy network continuously, which control element 26 might use for controlling devices.

In a further embodiment, a so as to say less independently implemented but still decentralised control structure might be provided, by distributing control commands with the energy network according to structure of the control levels from high to low and to process the control commands directly so that no storage, at least no long term storage, might be implemented and the control commands might be kept in the short term storage or processor, like a RAM, for immediate processing and then new control commands are received by the control elements on a level from control elements of a higher level and/or from a central control station. However, the decentralized control can be much better provided independently on each level based on received control commands, if the received control commands are stored on the level by the control elements of this level.

Therefore, in the present embodiment, control element 26 stores the received control commands or in more detail the set of rules comprised by the control commands to be independent from further control commands. So the control of the devices controlled by control element 26 will be processed based on the stored control commands which are valid until they might be replaced by updating control commands received in particular from control element 16, i.e. from the first level 10, by control element 26 on the second level 20.

In this context, it is to be noted that the received set of rules might be stored in the one or more receiving control element or by the one or more receiving control elements in any appropriate, preferably adjacent, storage means, implemented in software, hardware or combination thereof.

Based on the stored set of rules, control element 26 controls one or more devices of the second level 20. The controlling is termed as locally controlling, because the controlling can technically be processed within the second level independently from further control commands and/or information from further devices, in particular from further devices of levels different from the level on which said locally controlling is processed. In a preferred embodiment, the control element, e.g. control element 26, might process the local control based on the stored set of rules and is therefore independent in regard of further control commands provided from another device or control element, but the control element, e.g. control element 26 might furthermore need further information, in particular referring to the devices controlled by said control element or referring to further devices of the energy network, in particular in regard of the energy consumed or provided in particular on the second or third level of the energy network and this further information might be continuously provided and updated or might be stored and used until update.

The set of rules used for the local control might be implemented in particular as one or more computer programs which include commands like activating or des-activating devices of the energy network such as the controlled substations. For example, by processing the set of rules by control element 26, under specific conditions, control element 26 will activate or des-activate primary substation 21.

Preferably, the set of rules are implemented rather as abstract control programs which need further parameter so as the control program included therein will actually provide concrete control commands for the control of the controlled devices. Therefore, control element 26 will process information referring to one or more devices of the second level 20 of the energy network 100 and/or of the third level 30 of the energy network.

The information might related to the energy needed within the energy network 100 or by parts of the energy network, for example the energy consumer 33 on the third level 30 of the energy network 100. Therefore, energy consumer 33, preferably by means of the control element 38 associated to energy consumer 33, sends 24b information about the energy demand of the energy consumer 33, and thereby from the third level 30 of the energy network 100, to the second control element 26 on the second level 20 of the energy network 100.

Further devices of the third level 30 of the energy network might send information such as needed energy or - in case of (renewable) energy providers - supplied energy, from the third level 30 to the second level 20, in particular to control element 26. The information from the third level to control element 26 might be sent directly via communication between the device on the third level, in particular by means of its associated control element 36, 37, 38 or 39, and the control element 26 or the information from the third level to the second level might be provided from the third level to a control element on the second level different from control element 26, e.g. control element 27, which then forwards the gathered information to control element 26. In particular, the information sent from devices 33 and 34, might be sent to control element 27 and then forwarded from control element 27 to control element 26.

Furthermore, control element 26 might gather information about the devices of the second level 20 of the energy network 100. In particular, control element 26 will process information about secondary substation 21, e.g. if the secondary substation 21 is working or if there are operating problems. Furthermore, control element 26 might process information about further devices from the second level 20 of the energy network 100, e.g. from secondary substation 22, wherein the information might be provided via control element 27 which is in this example directly associated to secondary substation 22 or the information might be provided directly from secondary substation 22 to control element 26, in particular in case secondary substation 22 is controlled by control element 26 and there is no control element 27 contrary to the depicted implementation.

Based on the stored set of rules and preferably based on the information about devices of the second and/or third level of the energy network, control element 26 will be able to locally control one or more devices of the second level of the energy network 100 locally, which in particular means independently from further control commands provided in particular from a higher control level or a centralized control station (which might even not exist at all).

In a preferred embodiment, alternatively or additionally to provide the information from the third level 30 of the energy network 100 to the second level, said information from the third level, preferably along with information from the second level 20, will be provided to the first or higher levels of the energy network and then forwarded to the control element of the second level which actually processes this information for controlling devices of the second level. Information from the third level 30 might be sent directly from the third level 30 to the first or higher levels or via devices of the second level, in particular via control element 27, in particular different from the devices of the second level, which in the end receive the information from the first level 10, which in this example is control element 26 receiving the information from the first level or via the first level 10 from the third level 30.

For example, information about devices of the second level 20 of the energy network 100 and/or of the third level 30 of the energy network 100 might be sent to the first level 10 of the energy network and then provided to the second level 20 of the energy network 100. For example, private energy consumer 33, in particular by means of its control element 38, might sent information about its current energy demand, to control element 27 on the second level 20 of the energy network. Control element 27 then sends the information referring to private energy consumer 33 to control element 17 on the first level 10 of the energy network 100, which sends this information, preferably via control element 16 of the first level of the energy network 100, to control element 26 of the second level 20 the energy network 100. In a preferred embodiment, information about devices of the third level 30 of the energy network 100 is sent to a control element of the second level 20 of the energy network 100 and then forwarded to another control element of the second level 20 of the energy network 100. For example, private energy consumer 33, in particular by means of its control element 38, sends information about its current energy demand to control element 27 of the second level 20 of the energy network which forwards said information to control element 26 of the second level of the energy network 100.

In a preferred embodiment, the set of rules comprised by the control commands that the control element 26 received from the first level 10, comprise also specific rules how to process the information gathered from the second level 20 and/or third level 30, in particular if and which information should be gathered and/or forwarded to which devices, in particular devices of the first level 10.

In particular, based on the set of rules and the received or gathered, and preferably stored information, control element 26, will control one or more devices, e.g. secondary substation 21 on the second level 20. For example, the set of rule might comprise a rule or a kind or (computer) program to reduce the energy provided via secondary substation 21 to local energy consumer 21, in case local energy consumer 21 needs less energy. In more general terms, control element 21 adapts the energy provided via secondary substation 21 to the third level 30 of the energy network to the current energy demand on the third level 30 of the energy network 100.

For the control of one or more devices of the second level 20 of the energy network 100, control element 26 uses the set of rules received from the first level of the energy network 100. Alternatively, control element 26 might have received the set of rules by a higher level of the energy network, which would be the zero level of the transport network.

However, preferably, the set of rules on which control element 26 on the second level 20 of the energy network 100 bases the control of one or more devices of the second level 20 of the energy network is received from the first level 10 of the energy network 100, for example from control element 16.

Control element 16 or one or more further control elements of the first level 10 of the energy network has therefore created the set of rules which is then sent to control element 26 of the second level of the energy network 100.

In more general terms, control element 16 creates this set of rules for the control of devices of the second level 20 of the energy network and provides this first set of rules to control element 26 of the second level 20 of the energy network 100.

Consequently, control element 26 controls one or more devices on the second level 20 of the energy network 100 based on this first set of rules received from the first level of the energy network and preferably based on information about the devices of the second and third level of the energy network 100.

This first set of rules is used primarily for the control of devices of the first level of the energy network. This first set of rules might also be used for the control of devices of the third level of the energy network. In particular, based on this first set of rules, a second set of rules might be created, based on which devices of the third level 30 of the energy network 100 are controlled. This second set of rules might be created by one or more control elements of the first level of the energy network 100 and/or by one or more control elements of the second level 20 of the energy network, in particular based on the first set of rules.

For example, control element 26 creates based on the received first set of rules received from the first level 10 of the energy network 100, a second set of rules for the control of devices of the third level 30 of the energy network 100. Control element 26 then sends the second set of rules to one or more control elements of the third level of the energy network, for example to control element 36, 37, 38, 39. Based on the set of rules received from control element 26, control element 36, 37, 38 and/or 39 might then control the one or more devices of the third level 30 of the energy network 100.

As already mentioned, control element 26 controls one or devices on the second level 20 based on the set of rules received from the first level and stored on the second level and based on further information about devices of the second and third level as described above.

Control element 26 will control one or more devices on the second level 20 of the energy network 100, in particular secondary substation 21, based on the set of rules received from the first level 10 of the energy network, in particular from control element 16.

In a preferred embodiment, the received set of rules will be updated by a further set of rules or further control commands comprising updating rules which replace or supplement the previously sent and stored set of rules.

For example, control element 26 receives updating control commands from control element 16.

The updating control commands might be sent in regular time intervals by control element 16 to control element 26, in particular each day or each month or even each minute according to the implementation.

The updating control commands might be sent, if an event occurs which makes an update of the control commands or the set of rules necessary. Such an event might be an, in particular unexpected, increase of energy demand by a particular part of the energy network. The event, which makes an update necessary or appropriate and/or on which an update might be provided, might be indicated by an alarm.

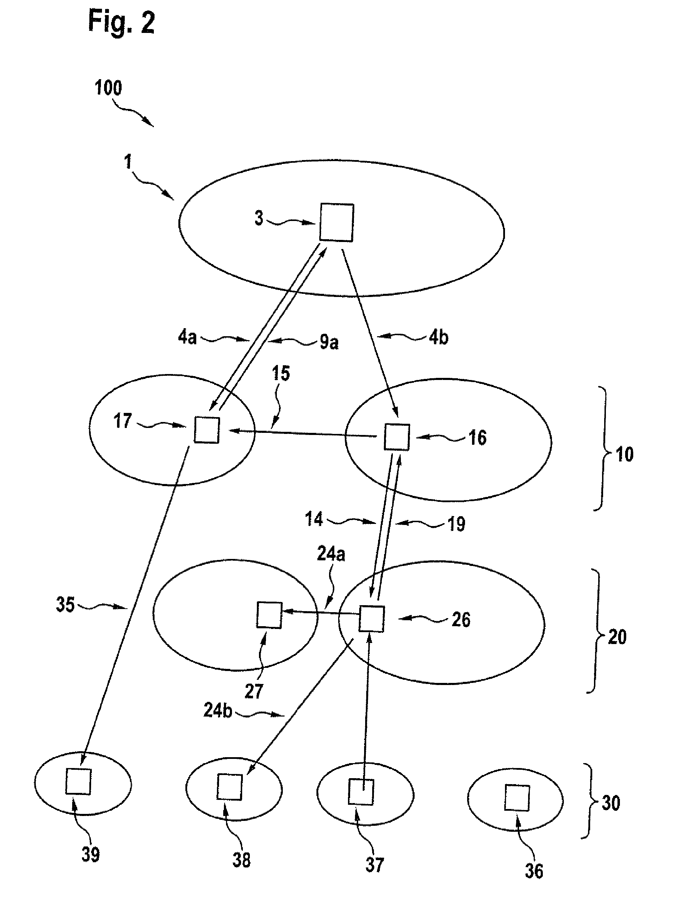

Fig. 2 depicts basically the same exemplary energy network 100 as figure 1, wherein for clarity reasons some elements are not depicted. In more detail, in particular the control elements are depicted, but not the devices controlled by the control elements. For example, the primary and secondary substations and the energy devices of the third level of the energy network which consume or provide energy are not depicted, but the control elements controlling these devices. However, these devices are still present in the energy network 100 and they do not appear on the picture so as not to overload the illustration. In contrast, the control elements 3, 16, 17, 26, 27, 36, 37, 38 and 39 are depicted which amongst other functionality such has information exchange control the non-depicted devices of the corresponding level of the energy network. Figure 2 is provided to illustrate a more general view of the control and information flow within the energy network however being still an exemplary illustration and still many variations of control and information flows might be implemented within the scope of the present invention. Over and above the disclosure of embodiments and features referring to the same technical context given along the above embodiments, figure 2 is meant to illustrate again and in more detail or in a more general aspect likewise the meshed character of the decentralized structure of the energy network in regard of the control and information forwarding and should give a better understanding that the presented implementation is much more robust against communication breakdown or hacker attack of parts of the energy network, in particular of one particular communication line between any two levels of the energy network, because the control commands and information might be forwarded on the communication lines which are still in order or even in a redundant manner to ascertain a secure resilient communication within the communication network.

In general, it has to be noted that the depicted communication flows, in particular the flow, i.e. transmitting or sending and receiving, of the control commands and of the information referring in particular to the devices of the levels of the energy network, such as status information, as described above, is still an exemplary and/or partially depicted illustration, wherein not all flows which might be implemented in this embodiment or in further embodiments are shown. In general, it could be stated that the command rules flow goes from a higher level of the energy network to the next lower level of the energy network, and optionally from said higher level to one or more further lower levels of the energy network. Alternatively or in addition, the command rules flow goes from said next lower level of the energy network to a further next lower level of the energy network. Within a level of the energy network, the commands and/or the set of rules might be exchanged between the one or more of the corresponding control elements of the respective level. The information flow goes basically from a lower level to the next higher level or optionally to one or more further higher levels. In addition, information flows might go between the control elements of a particular level or even optionally from a higher level to one or more lower level depending on the kind of information and implementation. As the control elements might be integrated within the devices of the corresponding level, for example the control element of a primary substation might be integrated within a substation, it results that what is said about the control elements might be valid accordingly for the devices of the energy network which are controlled, this means the communication between the devices of the energy network might be implemented directly between said devices or via further devices in between. Furthermore, as described above, a control element basically controls the devices at which the control element is adjacent and sends to said device the respective orders, such as activating or des-activating, which might be termed as concrete control commands by processing the rules. Alternatively or in addition, a particular control element might control further devices of the respective level of the energy network with which the control element is associated. In preferred embodiments, a control element might even control further devices of other levels of the energy network, in particular devices which belong to one or more lower levels of the energy network, in particular by sending control commands or optionally concrete control orders to the control elements adjacent to the controlled devices. Furthermore, as already mentioned, control elements and/or devices of a particular level, might exchange control commands comprising rules and/or further information between each other. In a quite general wording, it could be said that each device in the widest sense and/or control element of the energy network might be able to communicate and exchange the determined information in the widest sense and/or control commands between each other of the devices and/or control elements.

By this meshed character of the energy network and the decentralized control of the energy network, the energy network is much more robust against an authorized attack, for example by a hacker which attacks a particular communication line, because the command or information flow which would normally have been provided by this communication line, will be forwarded on an alternative way.

Therefore, fig. 2 depicts for exemplary reasons, that control element 16 on the first level 10 might send 14 control commands to the control element 26 comprising a first set of rules. Control element 26 then forwards 24a the first set of rules to control element 27 on the second level 20. Control element 26 sends 19 information referring to devices of the second level 20 to control element 16. Furthermore, control element 26, in particular based on the first set of rules, creates a second set of rules and sends 24b the second set of rules to control element 38, which controls devices of the third level 30 of the energy network 100, in particular energy consumer 33. Furthermore, fig. 2 depicts that control element 3, which in particular may be part of the wide area control on the level of the transport network might send 4a, 4b a set of rules to control element 17 and 16, respectively. This set of rules could be termed as a zero set of rules, accordingly to term the level of the transport network 1 as a zero level. Control element 17 might send 9a status information about devices of the first level 10 to control element 3. The status information referring to control element 16 might be sent 15 from control element 16 to control element 17, in particular control element 17 might further process the status information of control element 16 along with its own status information, before sending 9a the status information to control element 3. Furthermore, control element 17 might create a set of rules for the control of the third level 30, and send 35 this set of rules to control element 39, which controls one or more devices of the third level 30 based on the set of rules received from control element 17. Preferably, the one or more set of rules of a higher level, in particular created by the highest level, already includes rules for the creation of the set of rules for the lower level, so e.g. the set of rule created by control element 3 might indicate how control elements 16 and 17 create the sets of rules, respectively, which they send to devices of the lower levels, in particular control element 16 to control element 26 on the one hand and control element 17 to control element 39 on the other hand. Further, fig. 2 illustrates that control element 27 can be provided with a set of rules, even if the communication between control element 17 and control element 27 might be interrupted or disturbed by communication breakdown or hacker attack, because control element 27 can receive 24a the set of rules from control element 26.

Furthermore, again with reference to figures 1 and 2, information flows might be provided in many ways, which might be alternative or redundant. For example, control element 26 might send 19 information referring to devices of the second or third level to control element 16. Control element 26 might receive 25 information referring to control element 27 and/or to device 22 from control element 27. Control element 26 might receive 29b information referring to devices of the third level 30 of the energy network 100, for example referring to energy consumer 33 from control elements 38 and referring to private energy provider 32 from control element 37. Control element 26 receives 29a information from secondary substation 21. Control element 26 might process all this information and/or might forward this information or part of this information to further control elements, in particular on the same, second, level or on a higher, e.g. first level, in particular might forward 19 this information to control element 16 or might send 24a this information to control element 27.

The control of the devices of the second level 20 of the energy network 100 is provided in particular by a control element, e.g. control element 26, associated with the second level 20 of the energy network 100 and controlling the devices of the second level 20 of the energy network, for example secondary substation 21. The control element 26 is adapted to receive 14 one or more control commands provided by one or more control elements associated with the first level 10 of the energy network 100, for example provided by the control element 16. The one or more control commands comprise a set of rules for controlling the second level 20 of the energy network 100. Preferably, the second control element 26 is adapted to store the set of rules received from one or more of the first control elements, for example from control element 16. The second control element 26 is adapted to locally control 26a one or more devices of the second level 20 of the energy network 100, for example secondary substation 21 based on the, preferably stored, set of rules.

Control element 26 is alternatively or in addition adapted to process information referring to one or more devices of the second level of the energy network, for example referring to secondary substation 21, and/or information referring to one or more devices of the third level 30 of the energy network 100, for example private energy consumer 31 and/or local energy provider 32.

The control element 26 controls devices of the second level 20 of the energy network 100 in particular based on a set of rules, which is provided in particular by one or more control elements associated with the first level 10 of the energy network 100. For example, control element 16 is associated with the first level 10 of the energy network 100 and is adapted to create a set of rules for the control of the second level 20 of the energy network 100. Control element 16 provides the set of rules to one or more control elements associated to the second level 20 of the energy network 100, for example to control element 26.

The control elements, e.g. 16, 17, 26, 27 and further control elements 3, 36, 37, 38 and/or 39 may be implemented in software, hardware or a combination thereof. A control element 16, 17, 26, 27, 3, 36, 37, 38, 39 may be implemented as a single unit, a stand-alone device, or within a database, integrated in a computer and/or within a computer network. A control element 16, 17, 26, 27, 3, 36, 37, 38, 39 may be implemented through the use of hardware, software and/or hardware capable of executing software in association with appropriate software.

More specifically, the control element 16, 17, 26, 27, 3, 36, 37, 38, 39 can be comprised or implemented by circuit-based processes, including possible implementation as a single integrated circuit, such as an ASIC (= Application Specific Integrated Circuit) or such as an FPGA (= Field Programmable Gate Array), a multi-chip module, a single card, or a multi-card circuit pack. The functions of a control element 16, 17, 26, 27, 3, 36, 37, 38, 39 may be implemented as processing blocks in a software program. Such software may be employed in a digital signal processor, micro-controller, or general-purpose computer implemented as a single device or integrated in a computer network.

A control element 16, 17, 26, 27, 3, 36, 37, 38, 39 may comprise program code embodied in tangible media, such as magnetic recording media, optical recording media, solid state memory, floppy diskettes, CD-ROMs, hard drives, or any other machine-readable storage medium, wherein, when the program code is loaded into and executed in the control element 16, 17, 26, 27, 3, 36, 37, 38, 39, the control element 16, 17, 26, 27, 3, 36, 37, 38, 39 becomes an apparatus used for practicing the invention. The present invention might further be implemented by means of a computer program product adapted to execute the method of one of the claims 1 - 13, when executed on a computer.

The functions of a control element will be described in more detail for exemplary reasons referring to control element 26. The control element 26 processes based on the received set of rules and further information about the devices of the second and optionally the third level of the energy network 100 control of one or more devices of the second level 20 of the energy network 100. Control element 26 might in particular control 26a, e.g. activate or des-activate secondary substation 21, and/or one or more of the further devices of the second level 20 of the energy network 100. In case, beside control element 26 further control elements are implemented on the second level of the energy network, control element 26 might coordinate the control of the devices of the second level of the energy network with the further control elements on the second level. In particular, control element 26 might exchange - indicated by reference signs 24a and 25 - control commands and/or information about the devices to be controlled or further information, e.g. about the devices of the third level of the energy network, with the further control elements, e.g. control element 27, of the second level 20 of the energy network 100.

In particular, control element 26 might receive, transmit and/or process status information from and to further devices of the energy network, in particular from and/or to further control elements, in particular of the second level of the energy network, and/or of further devices of the energy network 100. Status information might be defined as information about the status, in particular energy demand, energy supply, switch-off, switch-on in relation to the energy network, in particular in relation to the devices of the energy network and/or to the energy providers and/or consumers of the energy network.

Furthermore, the local processing of control and further information by control element 26 might comprise processing measurements data which are needed for the control of devices, the data might comprise e.g. the energy demand, energy supply of devices of the energy network and/or of providers and/or consumers of the energy network 100.

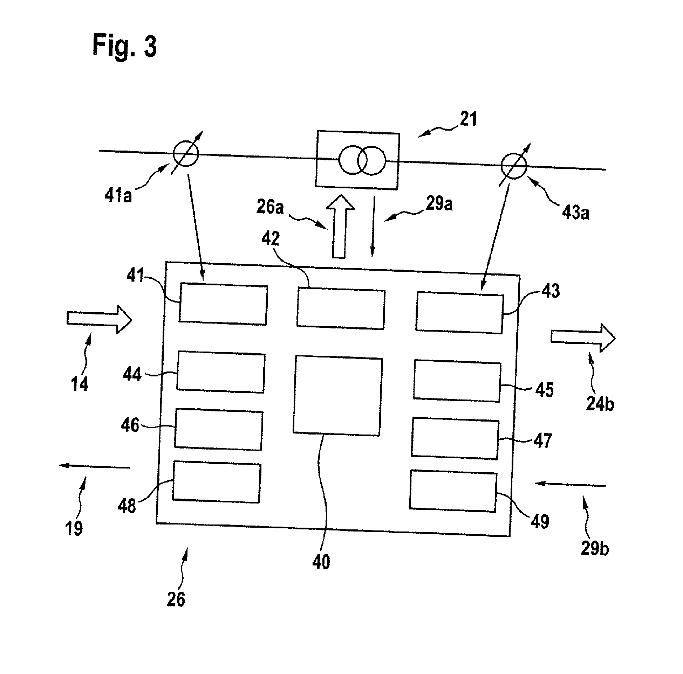

Figure 3 depicts a more detailed view of a control element, for example control element 26. With reference to figure 3, only parts of the described embodiment are detailed, however, figure 3 is to be seen in context of figures 2 and 1, which all only give some aspects of the descript embodiments as already stated. Control element 26 receives 14 a set of rules, in particular sent from the first level 10 of the energy network 100. Furthermore, control element 26 receives 29b information from devices of the third level 30 of the energy network and receives 29a information from a device of the second level 20 of the energy network 100 controlled by control element 26, in this example from secondary substation 21. Control element 26 processes the set of rules and/or the received information, in particular based on the stored set of rules and thereby locally controls 26a the secondary substation 21. Furthermore, control element 26 might send 19 information to the first level 10 of the energy network 100 and/or might create and sent 24b a set of rules to the third level 30 of the energy network 100, in particular to a control device 36, 37, 38 and/or 39 of the third level 30 of the energy network 100.

The set of rules processed, i.e. in this context executed, by control element 26 in order to control 26a secondary substation 21 might be implemented in control element 26 as modules which might be provided in software, hardware or combination thereof. For example, each rule might be implemented by means of one or more software modules, which might be combined when executing a specific rule. Alternatively or in addition, the processing of a particular rule might be processed by only one module of control element 26 depending on the implementation and/or the particular rule. Furthermore, control element 26 might comprise a main control module 40, which might be used in implementing a particular rule maybe in combination with one or more further modules of control element 26.

For exemplary reasons, the modules of control element 26 might be implemented as the following: MV measurement 41, Transformer control rule 42, LV measurement 43, Actual generation rule 44, Reactive power 45, Verification of control requests if plausible 46, Renewal control rule 47, Status info 48, Short and long term generation schedule 49.

The MV measurement 41 module implements the measurements on the medium voltage level; the Transformer control rule 42 implements the control of a transformer of a substation, in this example the transformer of substation 21; the LV measurement 43 implements the measurements on the low voltage level. For example, in order process the medium voltage and low voltage measurements, the control element 26 might be provided by measurements taken from measurement points at the corresponding places within the energy network 100. For example control element 26 might be connected with a measurement point 41 a in the medium voltage part of the energy network 100, which provides the control element 26 with measurements about the voltage and/or furthermore consumption in this medium voltage part of the energy network 100. Furthermore, control element 26 might be provided by a measurement point 43a with measurements about the voltage and/or consumption in the low voltage part of the energy network 100. These or further measurement points which all might be implemented optionally as adjacent or remote measurement points might provide to control element 26 further measurements about voltage, power, current, power quality etc. within the energy network 100. Besides these measurement points which provide information to control element 26, further information is provided to control element 26 by devices of the energy network 100. According to the implementation, the information indicated by reference signs 41 a, 43a and 29b might be redundant or alternative. As already stated, the given examples are only illustrative and along the description many further alternative or combinable implementations are described. Furthermore, a manifold of implementation alternatives might be appreciated by a person skilled in the art.

Furthermore, Actual generation rule 44 is used for the control of the actual power generation within energy network 100; Reactive power 45 module is used to control the reactive power taken from or inserted into the energy network 100. The module 'Verification of control requests if plausible' 46 is used to verify if a control request of a further device or control element of the energy network is plausible and/or to be processed or not. Renewal control rule 47 is used to control the generation of renewable energy; Status info 48 is used to process and/or transmit status information of devices of the energy network 100, wherein a corresponding module might be implemented for receiving and processing corresponding status information of control elements and/or devices of the energy network 100. Short and long term generation schedule 49 is used to control the generation of energy within predetermined time schedules, in particular in short and long term schedules.

In the following, for illustrative reasons, examples of rules are presented in more detail on which the local control of devices of the second level 20 of the energy network 100 by control element 26 might be based.
1. Rule: Transformer-rule (e.g. MV/LV)
   1. Consumption on LV level > Generation on LV level
      1. Adaptation to typical voltage level
   2. Generation > Consumption
      1. If MV is able to receive LV power: Switch transformation factor to energy transfer to MV
      2. Else: **RESC**
   3. LV voltage on min. level
      1. Adaptation to typical voltage level, or Load Control, or RESC
   4. LV voltage on max. level
      1. If MV is able to receive LV power: Switch transformation factor to energy transfer to MV
      2. Else: **RESC**
2. Rule: Renewable Energy Source Control (RESC)
   (switch on/off, reduction, reactive power)
   1. Consumption > Generation
      1. -No reaction..let it run
   2. Generation > Consumption
      1. If MV is able to receive LV power: No reaction ; Eventually trigger generation of transformer rule
      2. Else: follow defined rule on:
         1. **Renewal generation switch off, reduction for all, selected or random**
         2. **Renewal generation reactive power insertion for all, selected or random**
   3. LV voltage on max. level
      1. If MV is able to receive LV power: No reaction ; Eventually trigger generation of transformer rule
      2. Else: follow defined rule on:
         1. **Renewal generation switch off, reduction for all, selected or random**
         2. **Renewal generation reactive power insertion for all, selected or random**
3. LV Power Quality Measurement
   1. If in range:
      1. - No action
   2. If out of range:
      1. Dependent of rule set; control over **Transformer** or **Renewal Control**
4. MV Measurement
   1. If in defined range [range rule]:
      1. No action
   2. If out of range [range rule]:
      1. Min. value
         1. Dependent on min. value rule and if LV is OK
            1. No action
         2. Dependent on min. value rule and if LV is NOT OK
            1. Follow rules for min value handling
      2. Max value
         1. Dependent on max. value rule and if LV is OK
            1. No action
         2. Dependent on max. value rule and if LV is NOT OK
            1. Follow rules for min value handling
            2. **Transformer control**
            3. **Renewal Control**
            4. **others**

By implementing the described methods, the present invention practically solves fundamental requirements of energy suppliers and their customers in order to achieve stability under the use of significant volatile decentralized production. Due to a better power grid management, it will give cost benefits to the power network operator. An interesting benefit is also the fact that the method supports local energy autonomy in case that higher network levels are cut or are having difficulties to deliver the full amount of energy needed during a time frame. The concept allows for realization of a robust intelligent power grid. Based on its decentralized character it is highly scalable avoiding huge a priori investments in large control centers.

## Claims

1. A method of providing control for an energy network (100), the energy network (100) comprising one or more first control elements (16, 17, 18) associated with a first level (10) of the energy network (100) and one or more second control elements (26, 27, 28) associated with a second level (20) of the energy network (100), wherein the method comprises the steps of:
- receiving (14), by one or more of the second control elements (26, 27, 28) associated with the second level (20) of the energy network (100), one or more control commands provided by one or more of the first control elements (16, 17, 18) associated with the first level (10) of the energy network (100), the one or more control commands comprising a set of rules for controlling the second level (20) of the energy network (100);
- preferably storing the set of rules received from one or more of the first control elements (16, 17, 18) in said one or more second control elements (26, 27, 28); and
- locally controlling (26a), by said one or more second control elements (26, 27, 28), one or more devices (21, 22, 23) of the second level (20) of the energy network (100) based on the, preferably stored, set of rules; and/or
- locally processing, by said one or more second control elements (26, 27, 28), based on the, preferably stored, set of rules, information referring to one or more devices (21, 22, 23) of the second level (20) of the energy network (100) and/or information referring to one or more devices (31, 32, 33, 34) of a third level (30) of the energy network (100).

2. The method according to claim 1, wherein the step of locally processing information referring to one or more devices (21, 22, 23; 31, 32, 33, 34) of the second (20) and/or third (30) level of the energy network (100), comprises:
- processing measurements provided by said devices; and/or
- processing status information being information about the status, in particular energy demand, energy supply, switch-off, switch-on, of said devices (21, 22, 23; 31, 32, 33, 34) of the energy network (100), in particular in relation to the energy providers and/or consumers of the energy network (100).

3. The method according to claim 1, wherein the step of locally processing information referring to one or more devices (21, 22, 23; 31, 32, 33, 34) of the second level (20) and/or of third level (30) of the energy network (100) comprises:
- receiving (29a), by said one or more second control elements (26, 27, 28), information from one or more devices (21, 22, 23) of the second level (20) of the energy network (100); and/or
- receiving (29b), by said one or more second control elements (26, 27, 28), information from one or more devices (31, 32, 33, 34) of the third level (30) of the energy network (100);
- and preferably storing the received (29a, 29b) information referring to one or more devices (21, 22, 23; 31, 32, 33, 34) of the second (20) and/or third level (30) of the energy network (100).

4. The method according to claim 1, wherein the step of locally processing information referring to one or more devices (21, 22, 23; 31, 32, 33, 34) of the second (20) and/or third (30) level of the energy network (100) comprises forwarding (19) the information, in particular information about processed measurement and/or received and/or processed status information, to the one or more first control elements (16, 17, 18) associated with the first level (10) of the energy network (100).

5. The method according to claim 1, further comprising:
- forwarding (24a) the set of rules and/or further information within the second level (20) of the energy network (100) by sending, by one or more second control elements (26, 27, 28) of the second level (20) of the energy network (100), the set of rules and/or further information to one or more of the other second control elements (26, 27, 28) of the second level (20) of the energy network (100), wherein in particular one or more second control elements (26, 27, 28) of the second level (20) of the energy network (100) receive the set of rules and/or further information redundantly.

6. The method according to claim 1, further comprising:
- creating, by the one or more first control elements (16, 17, 18) associated with the first level (10) of the energy network (100), a first set of rules for the control of the second level (20) of the energy network (100);
- providing, by the one or more first control elements (16, 17, 18) associated with the first level (10) of the energy network (100), the first set of rules to the one or more second control elements (26, 27, 28) associated with the second level (20) of the energy network (100).

7. The method according to claim 6, wherein the method further comprises:
- creating, by the one or more first control elements (16, 17, 18) associated with the first level (10) of the energy network (100) and/or, preferably based on the first set of rules, by the one or more second control elements (26, 27, 28) associated with the second level (20) of the energy network (100), a second set of rules for the control of the third level (30) of the energy network (100);
- providing, by the one or more first control elements (16, 17, 18) associated with the first level (10) of the energy network (100) or by the one or more second control elements (26, 27, 28) associated with the second level (20) of the energy network (100), the second set of rules to one or more third control elements (36, 37, 38, 39) associated with the third level (30) of the energy network (100).

8. The method according to claim 1, wherein the method further comprises:
- receiving, by one or more of the second control elements (26, 27, 28) associated with the second level (20) of the energy network (100) one or more updating control commands provided by one or more of the first control elements (16, 17, 18) associated with the first level (10) of the energy network (100), the one or more updating control commands comprising a set of rules for controlling the second level (20) of the energy network (100), wherein the set of rules comprised by the updating control commands replaces and/or supplements the set of rules comprised by the control commands received before the updating control commands have been received.

9. The method according to claim 8, wherein the set of rules is updated
- regularly, in particular in regular time intervals, in particular each day or each minute; and/or
- upon occurrence of an event, in particular if the energy demand and/or supply, in particular of one or more particular devices of the energy network, exceeds a predetermined limit.

10. The method according to claim 1, wherein the step of locally controlling one or more devices (21, 22, 23) of the second level (20) of the energy network (100) comprises:
- controlling the one or more devices (21, 22, 23) of the second level (20) of the energy network (100) by said one or more second control elements (26, 27, 28) of the second level (20) of the energy network (100) based on the received set of rules autarkical on the second level (20), in particular independently on said second level (20) by means of the received, and preferably stored, set of rules without that further control commands are needed and even in case of communication breakout between said one or more second control elements (26, 27, 28) of the second level (20) and the one or more first control elements (16, 17, 18) of the first level (10) of the energy network (100) from which the control commands have been received.

11. The method according to claim 1, wherein the step of locally controlling (26a) the one or more devices (21, 22, 23) of the second level (20) of the energy network (100) comprises:
- activating or deactivating the one or more devices (21, 22, 23) of the second level (20) of the energy network (100);
- processing measurements in regard of the one or more devices (21, 22, 23) of the second level (20) of the energy network (100); and/or
- receiving information from the one or more devices (21, 22, 23) of the second level (20) of the energy network (100), processing the received information based on the set of rules and creating control commands to be sent to the one or more devices (21, 22, 23) of the second level (20) of the energy network (100) based on said processing.

12. The method according to claim 1, wherein the first (10), second (20) and third (30) level of the energy network (100) are each one of a level of a plurality of levels of the energy network (100) comprising in particular a level of a transmission network (1) comprising the devices (2) of the transmission network (1), a level of the distribution network comprising the devices of the distribution network, the level of the distribution network being preferably subdivided into a level on which primary substations (11, 12) are implemented and a level on which secondary substations (21, 22) are implemented, and a level of the local energy network comprising the devices (31, 32, 33, 34) of the local energy network, in particular of energy consumers and local energy providers.

13. The method according to claim 1, wherein the levels of the energy network are hierarchically implemented from a highest level to a lowest level, in particular the first level being the highest level, the second level being the next level lower than the first level, the third level being the next level lower than the second level.

14. A control element (26, 27, 28), associated with a second level (20) of an energy network (100), the control element (26, 27, 28) being adapted to receive (14) one or more control commands provided by one or more control elements (16, 17, 18) associated with a first level (10) of the energy network (100), the one or more control commands comprising a set of rules for controlling the second level (20) of the energy network (100), preferably to store the set of rules, and to locally control (26a) one or more devices (21, 22, 23) of the second level (20) of the energy network (100) based on the, preferably stored, set of rules and/or to locally process information referring to one or more devices (21, 22, 23) of the second level (20) of the energy network (100) and/or to one or more devices (31, 32, 33, 34) of a third level (30) of the energy network (100).

15. A control element (16, 17, 18) associated with a first level (10) of an energy network (100), the control element (16, 17, 18) being adapted to create a set of rules for the control of a second level (20) of the energy network (100) and to provide the set of rules to one or more control elements (26, 27, 28) associated with the second level (20) of the energy network (100).
